# EUROPEAN PATENT APPLICATION

(11) **EP 4 726 797 A1**
(43) Date of publication of application: **15.04.2026**
(21) Application number: 24849487.4
(22) Date of filing: 25.07.2024
(51) Int. Cl.: H01M 4/13, H01M 4/72, H01M 4/139, H01M 4/04

(54) **ELECTRODE AND MANUFACTURING METHOD THEREFOR**

(30) Priority: 28.07.2023 KR 20230099166
(71) Applicant: LG Energy Solution, Ltd., Seoul 07335 (KR)
(72) Inventor: SEONG, Eun Kyu, Daejeon 34122 (KR); KIM, Ji Hyun, Daejeon 34122 (KR); LIM, Soo Hyun, Daejeon 34122 (KR)
(74) Representative: Plasseraud IP
(86) International application number: PCT/KR2024/010850
(87) International publication number: WO 2025/028918

(57) **Abstract**

An electrode according to an embodiment of the present disclosure may include a base current collector; a porous current collector stacked on the base current collector and having a larger thickness than the base current collector; and an active material layer coated on the porous current collector and having a larger thickness than the base current collector.

## Description

### TECHNICAL FIELD

### CROSS-REFERENCE TO RELATED APPLICATIONS

The present application claims priority to Korean Patent Application No. 10-2023-0099166 filed on July 28, 2023 in the Republic of Korea, the disclosure of which is incorporated herein by reference.

### TECHNICAL FIELD

The present disclosure relates to an electrode having an active material layer coated on a current collector and a method for manufacturing the same.

### BACKGROUND ART

A secondary battery generally includes an electrode assembly and a case accommodating the electrode assembly, and the electrode assembly received in the case includes a positive electrode, a separator and a negative electrode stacked at least one time. Additionally, each of the positive electrode and the negative electrode may include a current collector and an active material layer coated on at least one surface of the current collector.

A process for mass production of the positive electrode or the negative electrode includes the steps of applying an active material slurry including a binder and a conductive material mixed at an optimal ratio to at least one surface of an electrode current collector web transported by a roll-to-roll method, and drying the applied active material slurry to form an active material layer. By a series of steps, a stack structure having the active material layer coated on the electrode current collector is formed.

Subsequently, the stack structure may be cut into a predetermined size to manufacture the electrode. Additionally, an electrode assembly may be manufactured by stacking a plurality of electrodes with a separator interposed between them.

In the electrode of the electrode assembly, the amount of active material applied to the current collector is an important factor that determines the capacity of the secondary battery. That is, with the increasing thickness of the active material layer coated on a predetermined area of the current collector, the capacity of the electrode may increase.

However, when the thickness of the active material layer is very large compared to the thickness of the current collector, the transport path of lithium ions increases, leading to intercalation/deintercalation of lithium to or from the active material far away from the current collector, and limited movement of electrons through the current collector. Additionally, the conductive material that provides the electrical path in the electrode is chaotically distributed between the active material and the binder, and when the loading amount of the electrode layer increases, the curvature of the electrical path increases and eventually the resistance increases. That is, the output of the electrode reduces.

To solve this problem, an approach to use a porous current collector having a larger thickness may be contemplated. However, this approach has problems that the active material slurry applied to the porous current collector flows down and it is not easy to notch and weld an electrode tab.

### SUMMARY

### TECHNICAL PROBLEM

The present disclosure is directed to providing an electrode that has high capacity and output, and in which an active material slurry does not flow down in its manufacturing process, and a method for manufacturing the same.

### TECHNICAL SOLUTION

An electrode according to an embodiment of the present disclosure may include a base current collector; a porous current collector stacked on the base current collector and having a larger thickness than the base current collector; and an active material layer coated on the porous current collector and having a larger thickness than the base current collector.

The base current collector may include a coated portion on which the porous current collector is stacked; and an uncoated portion connected to the coated portion and protruded more outward compared to the porous current collector and the active material layer.

A part of the active material layer may contact the base current collector through the porous current collector.

The thickness of the active material layer may be equal to or larger than the thickness of the porous current collector.

The porous current collector may include a first porous current collector stacked on one surface of the base current collector; and a second porous current collector stacked on the other surface of the current collector. The active material layer may include a first active material layer coated on an outer surface of the first porous current collector; and a second active material layer coated on an outer surface of the second porous current collector.

A method for manufacturing an electrode according to an embodiment of the present disclosure may include the steps of: stacking a porous current collector on a base current collector, wherein the porous current collector has a larger thickness than the base current collector; and coating an active material layer on the porous current collector, wherein the active material layer has a larger thickness than the base current collector.

The step of coating the active material layer may include the steps of: applying an active material slurry to the porous current collector; and drying the active material slurry in a state that a part of the active material slurry are in contact with the base current collector through the porous current collector, to form the active material layer.

A thickness of the active material slurry applied to the porous current collector is equal to or larger than the thickness of the porous current collector.

The method for manufacturing the electrode may further include the step of rolling the base current collector, the porous current collector and the active material layer.

The base current collector may include a coated portion on which the porous current collector is stacked; and an uncoated portion connected to the coated portion and protruded more outward compared to the porous current collector and the active material layer. The method for manufacturing the electrode may further include the step of notching the uncoated portion into an electrode tab.

### ADVANTAGEOUS EFFECTS

According to an exemplary embodiment of the present disclosure, because the porous current collector is thicker than the base current collector, it may be possible to increase the thickness of the active material layer without concern for the reduced output of the electrode, thereby increasing the capacity of the electrode. That is, the electrode may have high capacity and output.

Additionally, the base current collector may prevent the active material slurry from flowing down through the porous current collector in the process of manufacturing the electrode.

Additionally, the active material layer may be formed by drying the active material slurry in a state that a part of the active material slurry are filled in the plurality of holes of the porous current collector. Accordingly, the active material layer may be firmly coupled to not only the porous current collector but also the base current collector, and the coupling strength between the porous current collector and the base current collector may be improved.

Besides, the effects of the present disclosure may include effects that can be easily predicted by those skilled in the art from the configurations according to the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a plan view of an electrode according to a first embodiment of the present disclosure.
FIG. 2 is a cross-sectional view of FIG. 1, taken along the line A-A'.
FIG. 3 is a cross-sectional view of an electrode according to a second embodiment of the present disclosure.
FIG. 4 is a flowchart of a method for manufacturing an electrode according to a third embodiment of the present disclosure.
FIG. 5 is a schematic diagram illustrating a method for manufacturing an electrode according to a third embodiment of the present disclosure.
FIG. 6 is a plan view of a stack structure shown in FIG. 5.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

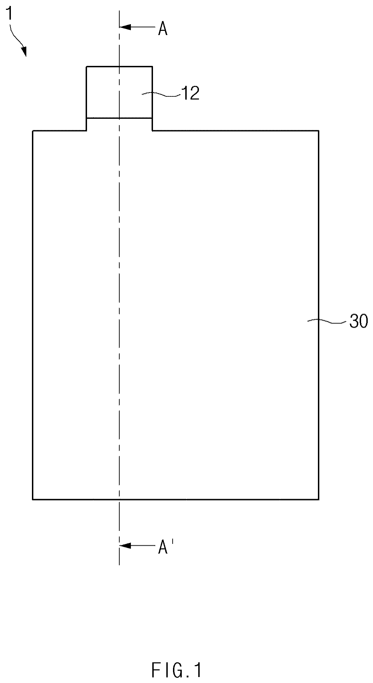

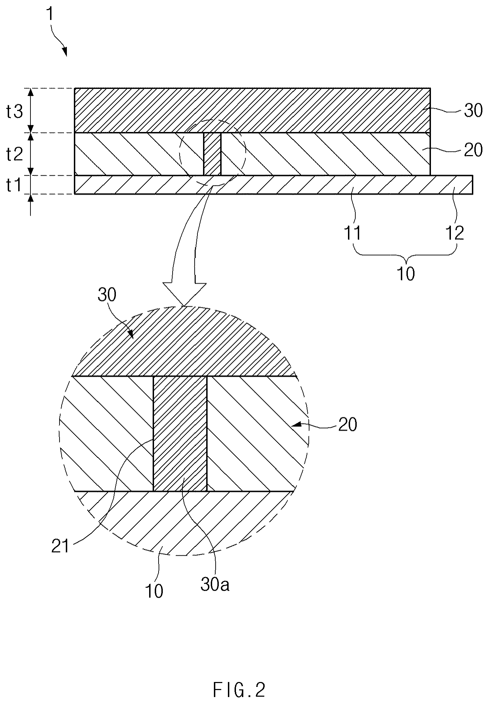

FIG. 1 is a plan view of an electrode according to a first embodiment of the present disclosure, and FIG. 2 is a cross-sectional view of FIG. 1, taken along the line A-A'.

The electrode 1 according to the first embodiment of the present disclosure may include a base current collector 10, a porous current collector 20 stacked on the base current collector 10, and an active material layer 30 coated on the porous current collector 20.

The base current collector 10 and the porous current collector 11 may play a role in supplying electrons provided from an external wire (not shown) to the active material layer 30, or transferring electrons produced as a result of electrode reaction to the external wire.

The base current collector 10 and the porous current collector 20 may include any type of metal having high conductivity without causing any chemical change in the voltage range of the battery. For example, the metal may include copper, gold, iron, stainless steel, aluminum, nickel, titanium, sintered carbon or aluminum or stainless steel treated with carbon, nickel, titanium or silver on the surface, but is not limited thereto.

The base current collector 10 may be adhered to one surface of the porous current collector 20, and the active material layer 30 may be adhered to the other surface of the porous current collector 20.

The base current collector 10 may be, for example, 3 µm to 500 µm in thickness, but the thickness is not limited thereto.

The porous current collector 20 may have a three-dimensional mesh structure. Accordingly, the porous current collector 20 may have a plurality of holes 21 (FIG. 2 shows a single hole for convenience). The plurality of holes 21 may be formed regularly or irregularly. However, the configuration of the porous current collector 20 is not limited thereto.

The active material layer 30 may be easily adhered to the porous current collector 20. The active material layer 30 may be referred to as an electrode material layer. The active material layer 30 includes an electrode active material and a binder, and if necessary, may further include a conductive material. The electrode active material may be a positive electrode active material or a negative electrode active material according to the polarity of the electrode 1.

The positive electrode active material may include active materials commonly used in positive electrodes of secondary batteries. For example, the positive electrode active material may include lithium transition metal composite oxide such as LiMₓO_{y} (M = Co, Ni, Mn, CoₐNi_{b}Mn_{c}) (for example, lithium manganese composite oxide such as LiMn₂O₄, lithium nickel oxide such as LiNiO₂, lithium cobalt oxide such as LiCoO₂ and these oxides substituted by other transition metal for manganese, nickel and cobalt or lithium-containing vanadium oxide) or chalcogen compounds (for example, manganese dioxide, titanium disulfide, molybdenum disulfide).

The negative electrode active material may include active materials commonly used in negative electrodes of secondary batteries. For example, the negative electrode active material may include lithium adsorption materials such as lithium alloys, carbon, petroleum cokes, activated carbon, graphite or other carbons, and may include metal oxide having the potential of less than 2 V, such as TiO₂, SnO₂ or Li₄Ti₅O₁₂, but is not limited thereto.

Based on the total weight of the electrode active material, the binder may be appropriately used in an amount of from 1 wt% to 10 wt%, and the conductive material may be appropriately used in an amount of from 1 wt% to 30 wt%. Examples of available binders may include aqueous binders such as polytetrafluoroethylene (PTFE), polyvinylidene fluoride (PVDF), polyvinylacetate, polyethyleneoxide, polypyrrolidone, polyvinyl alcohol, polyacrylonitrile, polyacrylic acid (PAA), carboxymethylcellulose (CMC), styrene-butadiene rubber (SBR).

The conductive material may generally include carbon black. The currently commercially available conductive materials include acetylene black (manufactured by Chevron Chemical Company or Gulf Oil Company), Ketjen Black EC (manufactured by Armak Company), Vulcan XC-72 (manufactured by Cabot Company) and Super P (manufactured by MMM), and also include linear conductive materials such as carbon nano tube, carbon (nano) fiber.

The active material layer 30 may be may be formed on the porous current collector 20 through the commonly used method. For example, an electrode active material may be mixed with a binder and a solvent, and if necessary, a conductive material and a dispersant and stirred to prepare an active material slurry, and the active material slurry may be applied to one surface of the porous current collector 20, followed by compression and drying to form the active material layer 30. A method for applying the active material slurry to the current collector is not limited to a particular one, and may include, for example, doctor blading, dipping and brushing.

A method for removing the solvent or the dispersant is not limited to a particular one, but may include drying to volatilize the solvent or the dispersant as quickly as possible within a speed range in which stress concentration does not occur to avoid cracks in the active material layer 30, or peel-off of the active material layer 30 from the porous current collector 20.

A part 30a of the active material layer 30 may contact the base current collector 10 through the porous current collector 20. More specifically, because the active material layer 30 is formed by applying the active material slurry to the porous current collector 20, a part of the active material slurry may be filled in the plurality of holes 21 of the porous current collector 20. Additionally, the active material slurry filled in the plurality of holes may reach one surface of the base current collector 10 and come into contact with the base current collector 10. One surface of the base current collector 10 refers to a surface on which the porous current collector 20 is stacked.

Accordingly, the active material layer 30 may be firmly coupled to not only the porous current collector 20 but also the base current collector 10. Furthermore, the coupling strength between the porous current collector 20 and the base current collector 10 may be also improved. Accordingly, it may be possible to prevent peel-off of the active material layer 30 due to repeated expansion and shrinkage during repeated charging and discharging of the battery.

In case the electrode 1 does not include the base current collector 10, the active material slurry applied to the porous current collector 20 may flow down through the plurality of holes 21 of the porous current collector 20. The base current collector 10 may prevent this problem.

A thickness t2 of the porous current collector 20 may be larger than a thickness t1 of the base current collector 10. Accordingly, because the porous current collector 20 may be formed with the sufficiently large thickness t2, even though a thickness t3 of the active material layer 30 is increased to increase the capacity of the electrode 1, it may be possible to prevent the output of the electrode 1 from reducing. That is, with the porous current collector 20, it may be possible to prevent the thickness t1 + t2 of the current collectors 10, 20 from becoming too small compared to the thickness t3 of the active material layer 30.

The thickness t3 of the active material layer 30 may be larger than the thickness t1 of the base current collector 10. The thickness t3 of the active material layer 30 may be equal to or larger than the thickness t2 of the porous current collector 20. Accordingly, because the active material layer 30 may be formed with the sufficiently large thickness t3, the capacity of the electrode 1 may increase.

Meanwhile, the base current collector 10 may include a coated portion 11 on which the porous current collector 20 is stacked, and an uncoated portion 12 connected to the coated portion 11 and protruded more outward compared to the porous current collector 20 and the active material layer 30.

The coated portion 11 may be an overlapping region with the porous current collector 20 and the active material layer 30 in the thickness direction of the electrode 1.

The uncoated portion 12 may be a non-overlapping region with the porous current collector 20 and the active material layer 30 in the thickness direction of the electrode 1. The uncoated portion 12 may be notched into an electrode tab having a preset shape. The uncoated portion and the electrode tab are substantially the same, and hereinafter the two elements are indicated by the same reference number '12'.

Accordingly, the electrode tab 12 may be easily formed by notching the base current collector 10 having a smaller thickness. When forming the electrode tab by notching the porous current collector 20, due to the large thickness of the porous current collector 20, notching may not be easy.

Additionally, when manufacturing an electrode assembly by stacking a plurality of electrodes 1, the electrode tabs 12 of the plurality of electrodes 1 may be welded together. Because each electrode tab 12 is formed by notching the base current collector 10, the electrode tab 12 may have a small thickness, and accordingly, the plurality of electrode tabs 12 may be easily welded. In case each electrode tab is formed by notching the porous current collector 20, due to the large thickness of the electrode tab, it may not be easy to weld the plurality of electrode tabs.

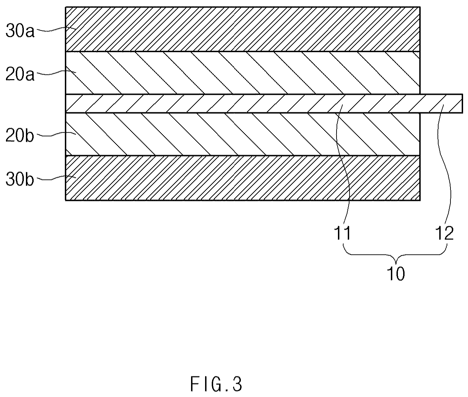

FIG. 3 is a cross-sectional view of an electrode according to a second embodiment of the present disclosure.

Hereinafter, the overlapping description with the foregoing description is omitted and difference(s) will be described.

In the case of the electrode according to this embodiment, the porous current collector 20 may include a pair of porous current collectors, and the active material layer 30 may include a pair of active material layers.

More specifically, the porous current collector 20 may include a first porous current collector 20a stacked on one surface of the base current collector 10, and a second porous current collector 20b stacked on the other surface of the base current collector 10.

Additionally, the active material layer 30 may include a first active material layer 30a coated on the outer surface of the first porous current collector 20a, and a second active material layer 30b coated on the outer surface of the second porous current collector 20b. The outer surface of each porous current collector 20a, 20b refers to surfaces located at the opposite sides of the base current collector 10.

By this configuration, the capacity and output of the electrode according to this embodiment may be further improved.

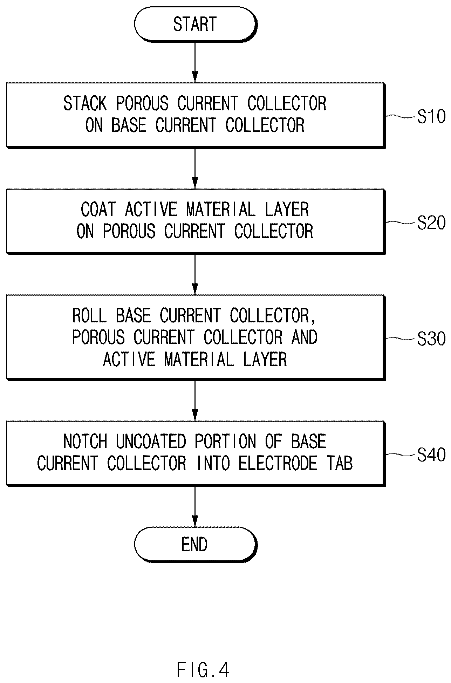

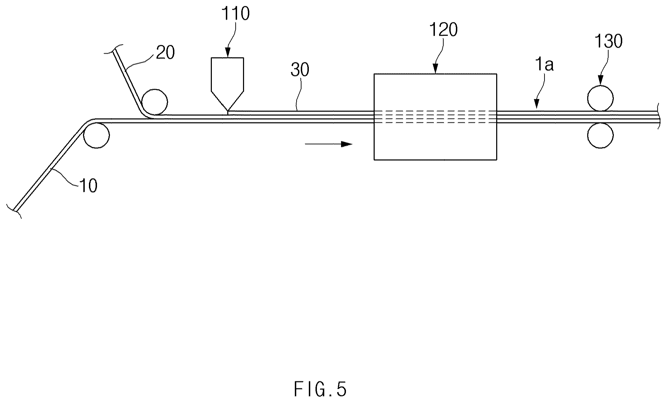

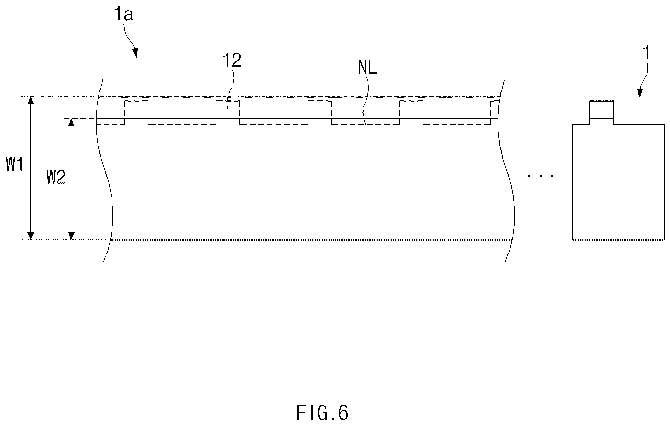

FIG. 4 is a flowchart of a method for manufacturing an electrode according to a third embodiment of the present disclosure, FIG. 5 is a schematic diagram illustrating the method for manufacturing the electrode according to the third embodiment of the present disclosure, and FIG. 6 is a plan view of a stack structure shown in FIG. 5.

The method for manufacturing the electrode (hereinafter, 'manufacturing method') according to the third embodiment of the present disclosure may include the step (S10) of stacking the porous current collector 20 on the base current collector 10 (hereinafter, 'stacking step'), and the step (S20) of coating the active material layer 30 on the porous current collector 20 (hereinafter, 'coating step').

FIG. 4 shows that the stacking step (S10) and the coating step (S20) are performed in a sequential order. However, the present disclosure is not limited thereto, and the coating step (S20) may be performed earlier than the stacking step (S10), or the stacking step (S10) and the coating step (S20) may be performed at the same time.

In the stacking step (S10), each of the base current collector 10 and the porous current collector 20 may be supplied in a sheet shape having a constant width. In this instance, the width W1 of the base current collector 10 may be larger than the width of the porous current collector 20. Additionally, as described previously, the porous current collector 20 may be thicker than the base current collector 10.

The porous current collector 20 may be supplied so as to be stacked on at least one surface of the base current collector 10. Although FIG. 5 shows a single porous current collector 20 supplied so as to be stacked on one surface of the base current collector 10, a pair of porous current collectors 20 may be supplied so as to be stacked on two surfaces of the base current collector 10.

The base current collector 10 and the porous current collector 20 may travel at the same speed.

The coating step (S20) may include the step of applying the active material slurry to the porous current collector 20 (hereinafter, 'application step'), and the step of drying the active material slurry to form the active material layer 30 (hereinafter, 'drying step'). The active material slurry and the active material layer are substantially the same, and hereinafter the two elements are indicated by the same reference number '30'.

In the application step, a coater 110 may apply the active material slurry 30 to the outer surface of the traveling porous current collector 20 continuously or in a predetermined cycle.

A thickness of the active material slurry 30 applied to the porous current collector 20 may be larger than the thickness t1 of the base current collector 10. The thickness of the active material slurry 30 may be equal to or larger than the thickness t2 of the porous current collector 20.

A width W2 of the active material slurry 30 applied to the porous current collector 20 may be equal or similar to the width of the porous current collector 20. Accordingly, a width W1 of the base current collector 10 may be larger than the width W2 of the active material slurry 30. A part of the base current collector 10 protruded more outward compared to the active material slurry 30 may be defined as the uncoated portion 12.

In the drying step, the active material slurry 30 applied to the porous current collector 20 may be dried while passing through a drying chamber 120, and the active material layer 30 may be formed.

When the active material slurry 30 gets dry, a part of the active material slurry 30 may be in contact with the base current collector 10 through the porous current collector 20. That is, the active material slurry 30 may get dry in a state that a part of the active material slurry 30 are filled in the plurality of holes 21 of the porous current collector 20. Accordingly, the active material layer 30 may be firmly coupled to not only the porous current collector 20 but also the base current collector 10. Furthermore, the coupling strength between the porous current collector 20 and the base current collector 10 may be also improved.

When the drying step is completed, the stack structure 1a including the base current collector 10, the porous current collector 20 and the active material layer 30 may be manufactured.

The manufacturing method may further include the step (S30) of rolling the base current collector 10, the porous current collector 20 and the active material layer 30 (hereinafter, 'rolling step').

In the rolling step (S30), the stack structure 1a may be rolled while passing through between a pair of press rolls 130. Accordingly, the base current collector 10, the porous current collector 20 and the active material layer 30 may be coupled to each other more firmly.

The manufacturing method may further include the step of notching the uncoated portion 12 of the base current collector 10 into the electrode tab 12 (S40) (hereinafter, 'notching step').

A notching unit (not shown) may notch the uncoated portion 12 into a predetermined shape to form the electrode tab 12. The notching unit may notch the uncoated portion 12 and a part of the edge of the coated portion 11 together. The notching unit may carry out notching along an imaginary notching line NL, and an area outside of the notching line NL may be cut and removed.

The electrode tab 12 may be the remaining part of the uncoated portion 12 after cutting. The electrode tab 12 may be formed at a predetermined interval along the length direction of the stack structure 1a.

Subsequently, in the subsequent process, the stack structure 1a having the electrode tab 12 may be cut into a predetermined length to manufacture the electrode 1.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [LIST OF REFERENCE NUMERALS]

| | | | |
|---|---|---|---|
| 1: | Electrode | 1a: | Stack structure |
| 10: | Base current collector | 11: | Coated portion |
| 12: | Uncoated portion, Electrode tab | 20: | Porous current collector |
| 30: | Active material layer, Active material slurry | | |

## Claims

1. An electrode comprising:
a base current collector;
a porous current collector stacked on the base current collector and having a larger thickness than the base current collector; and
an active material layer coated on the porous current collector and having a larger thickness than the base current collector.

2. The electrode according to claim 1,
wherein the base current collector comprises:
a coated portion on which the porous current collector is stacked; and
an uncoated portion connected to the coated portion and protruded more outward compared to the porous current collector and the active material layer.

3. The electrode according to claim 1,
wherein a part of the active material layer contacts the base current collector through the porous current collector.

4. The electrode according to claim 1,
wherein the thickness of the active material layer is equal to or larger than the thickness of the porous current collector.

5. The electrode according to claim 1,
wherein the porous current collector comprises:
a first porous current collector stacked on one surface of the base current collector;
and
a second porous current collector stacked on the other surface of the base current collector, and
wherein the active material layer includes:
a first active material layer coated on an outer surface of the first porous current collector; and
a second active material layer coated on an outer surface of the second porous current collector.

6. A method for manufacturing an electrode, comprising the steps of:
stacking a porous current collector on a base current collector, wherein the porous current collector has a larger thickness than the base current collector; and
coating an active material layer on the porous current collector, wherein the active material layer has a larger thickness than the base current collector.

7. The method for manufacturing the electrode according to claim 6,
wherein the step of coating the active material layer comprises the steps of:
applying an active material slurry to the porous current collector; and
drying the active material slurry in a state that a part of the active material slurry are in contact with the base current collector through the porous current collector, to form the active material layer.

8. The method for manufacturing the electrode according to claim 7,
wherein a thickness of the active material slurry applied to the porous current collector is equal to or larger than the thickness of the porous current collector.

9. The method for manufacturing the electrode according to claim 6, further comprising the step of:
rolling the base current collector, the porous current collector and the active material layer.

10. The method for manufacturing the electrode according to claim 6,
wherein the base current collector comprises:
a coated portion on which the porous current collector is stacked; and
an uncoated portion connected to the coated portion and protruded more outward compared to the porous current collector and the active material layer, and
wherein the method for manufacturing the electrode further comprises the step of notching the uncoated portion into an electrode tab.
